# EUROPÄISCHE PATENTSCHRIFT

(11) **EP 3 225 334 B1**
(45) Veröffentlichungstag und Bekanntmachung des Hinweises auf die Patenterteilung: **29.05.2019**
(21) Anmeldenummer: 17162631.0
(22) Anmeldetag: 23.03.2017
(51) Int. Cl.: B22F 3/105, B22F 5/00, B33Y 10/00, B33Y 30/00, B33Y 50/02

(54) **VERFAHREN UND VORRICHTUNG ZUM ADDITIVEN HERSTELLEN ZUMINDEST EINES BAUTEILBEREICHS EINES BAUTEILS**
METHOD AND APPARATUS FOR ADDITIVE MANUFACTURE OF AT LEAST ONE COMPONENT AREA OF A COMPONENT
PROCÉDÉ ET DISPOSITIF DE FABRICATION ADDITIVE D'AU MOINS UNE PARTIE D'UN COMPOSANT

(30) Priorität: 01.04.2016 DE 102016205432
(43) Veröffentlichungstag der Anmeldung: 04.10.2017
(73) Patentinhaber: MTU Aero Engines AG, 80995 München (DE)
(72) Erfinder: Liebl, Christian, 85461 Bockhorn (DE); Ladewig, Alexander, 83707 Bad Wiessee (DE); Bürger, Laura, 85221 Dachau (DE); Schlick, Georg, 80809 München (DE); Schlothauer, Steffen, 85253 Erdweg (DE); Dusel, Karl-Heinz, 85716 Unterschleißheim (DE)

(56) Entgegenhaltungen:
- EP-A1- 2 942 130
- DE-A1- 10 320 085
- DE-A1-102011 087 374
- DE-A1-102014 201 818
- DE-B3-102005 027 311
- US-A1- 2009 206 065
- H Krauss ET AL: "Thermography for Monitoring the Selective Laser Melting Process", Proceedings of the Annual International Solid Freeform Fabrication Symposium 2012, 1. Januar 2012 (2012-01-01), Seiten 999-1014, XP055348458, Gefunden im Internet: URL:https://sffsymposium.engr.utexas.edu/M anuscripts/2012/2012-76-Krauss.pdf [gefunden am 2017-02-22]

## Beschreibung

Die Erfindung betrifft ein Verfahren sowie eine Vorrichtung zum additiven Herstellen zumindest eines Bauteilbereichs eines Bauteils.

Verfahren und Vorrichtungen zur Herstellung von einzelnen Bauteilbereichen oder vollständigen Bauteilen sind in einer großen Vielzahl bekannt. Insbesondere sind additive bzw. generative Fertigungsverfahren (sog. Rapid Manufacturing- bzw. Rapid Prototyping-Verfahren) bekannt, bei denen das Bauteil, bei dem es sich beispielsweise um ein Bauteil einer Strömungsmaschine bzw. eines Flugtriebwerks handeln kann, schichtweise aufgebaut wird. Vorwiegend metallische Bauteile können beispielsweise durch Laser- bzw. Elektronenstrahlschmelz- oder -sinterverfahren hergestellt werden. Dabei wird zunächst schichtweise mindestens ein pulverförmiger Bauteilwerkstoff auf eine Bauteilplattform im Bereich einer Aufbau- und Fügezone der Vorrichtung aufgetragen. Anschließend wird der Bauteilwerkstoff schichtweise lokal verfestigt, indem dem Bauteilwerkstoff im Bereich der Aufbau- und Fügezone Energie mittels wenigstens eines Hochenergiestrahls, zum Beispiel eines Elektronen- oder Laserstrahls zugeführt wird, wodurch der Bauteilwerkstoff schmilzt und/oder versintert. Der Hochenergiestrahl wird dabei in Abhängigkeit einer Schichtinformation der jeweils herzustellenden Bauteilschicht gesteuert. Die Schichtinformationen werden üblicherweise aus einem 3D-CAD-Körper des Bauteils erzeugt und in einzelne Bauteilschichten unterteilt. Nach dem Verfestigen wird die Bauteilplattform schichtweise um eine vordefinierte Schichtdicke abgesenkt. Danach werden die genannten Schritte bis zur endgültigen Fertigstellung des gewünschten Bauteilbereichs oder des gesamten Bauteils wiederholt.

Die resultierenden Werkstoffeigenschaften hängen jedoch stark von den gewählten Belichtungsparametern des Hochenergiestrahls und der herzustellenden Bauteilgeometrie ab. Daher treten in der Praxis bei einem additiv hergestellten Bauteil oder Bauteilbereich häufig unterschiedliche Oberflächenqualitäten auf.

Verfahren und Vorrichtungen zur additiven Herstellung dreidimensionaler Bauteile, bei welchen Belichtungsparameter des Hochenergiestrahls zur Verbesserung der Bauqualität variiert werden, sind beispielsweise aus den Patent- und Offenlegungsschriften DE 10 2005 027 311 B3, US 2009/0206065 A1 und DE 10 2011 087 374 A1 bekannt.

Zusätzlich wirkt sich der Einstrahlwinkel des Hochenergiestrahls aus, so dass Bauteilbereiche, die vergleichsweise weit von einer Strahlungsquelle entfernt sind und eine starke Ablenkung des Hochenergiestrahls erforderlich machen, häufig eine andere Bauteilqualität aufweisen als Bauteilbereiche, die direkt unterhalb der Strahlungsquelle liegen.

Aufgabe der vorliegenden Erfindung ist es, ein Verfahren und eine Vorrichtung zu schaffen, welche die additiven Herstellung zumindest eines Bauteilbereichs mit homogeneren Werkstoffeigenschaften auch bei unterschiedlichen Bauteilgeometrien ermöglichen.

Die Aufgaben werden erfindungsgemäß durch ein Verfahren mit den Merkmalen des Patentanspruchs 1 sowie durch eine Vorrichtung mit den Merkmalen des Patentanspruchs 8 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen der Vorrichtung und umgekehrt anzusehen sind.

Ein erster Aspekt der Erfindung betrifft ein Verfahren zum additiven Herstellen zumindest eines Bauteilbereichs eines Bauteils, bei welchem zumindest die Schritte a) schichtweises Auftragen von mindestens einem pulverförmigen Bauteilwerkstoff auf eine Bauteilplattform im Bereich einer Aufbau- und Fügezone, b) schichtweises und lokales Verfestigen des Bauteilwerkstoffs durch selektives Belichten des Bauteilwerkstoffs mittels wenigstens eines Hochenergiestrahls im Bereich der Aufbau- und Fügezone unter Ausbildung einer Bauteilschicht, c) schichtweises Absenken der Bauteilplattform um eine vordefinierte Schichtdicke und d) Wiederholen der Schritte a) bis c) bis zur Fertigstellung des Bauteilbereichs oder des Bauteils durchgeführt werden. Dabei werden homogenere und zumindest weitgehend von einer Bauteilgeometrie unabhängige Werkstoffeigenschaften erfindungsgemäß dadurch erreicht, dass während wenigstens eines Schritts b) zumindest ein Belichtungsparameter des Hochenergiestrahls aus der Gruppe Leistung, Geschwindigkeit und Fokuslage in Abhängigkeit eines Einstrahlwinkels des Hochenergiestrahls zur Oberfläche der Bauteilschicht als Bauparameter und optional in Abhängigkeit wenigstens eines weiteren Bauparameters aus der Gruppe Bauteildicke, Hatchabstand zu einer benachbarten Belichtungsspur, Auslenkwinkel des Hochenergiestrahls bezogen auf eine Hochachse der Bauteilschicht, Überhangwinkel der Bauteilschicht, Schichtdicke der Bauteilschicht und Abstand zu einem vollen Volumenelement der Bauteilschicht eingestellt wird. Mit anderen Worten ist es erfindungsgemäß vorgesehen, dass 1, 2 oder 3 Belichtungsparameter aus der Gruppe Leistung, Geschwindigkeit und Fokuslage des Hochenergiestrahls beim Aufbau wenigstens einer Bauteilschicht über eine Funktion eingestellt wird bzw. werden, die ihrerseits den Bauparameter Einstrahlwinkel des Hochenergiestrahls zur Oberfläche der Bauteilschicht und optional 1, 2, 3, 4, 5 oder 6 weitere Bauparameter aus der Gruppe Bauteildicke, Hatchabstand zu einer benachbarten Belichtungsspur, Auslenkwinkel des Hochenergiestrahls bezogen auf eine Hochachse der Bauteilschicht, Überhangwinkel der Bauteilschicht, Schichtdicke der Bauteilschicht und Abstand zu einem vollen Volumenelement der Bauteilschicht berücksichtigt. Vorzugsweise werden alle drei Belichtungsparameter abhängig oder unabhängig voneinander in Abhängigkeit aller sieben Bauparameter bestimmt. Hierdurch werden für die betreffende Bauteilschicht besonders gute, homogene und optimal an die jeweilige Geometrie der Bauteilschicht angepasste Werkstoffeigenschaften sichergestellt. Insbesondere werden auch in Oberflächen- und Randbereichen sowie in spitz zulaufenden Bauteilbereichen ein Durchschlagen des Hochenergiestrahls einerseits und eine unzureichende Verfestigung des pulverförmigen Bauteilwerkstoffs andererseits verhindert.

In einer vorteilhaften Ausgestaltung der Erfindung ist vorgesehen, dass als additives Herstellungsverfahren ein Lasersinter- und/oder Laserschmelzverfahren und/oder als Hochenergiestrahl ein Laserstrahl verwendet wird. Hierdurch können Bauteilbereiche oder Bauteile hergestellt werden, deren mechanischen Eigenschaften zumindest im Wesentlichen denen des Bauteilwerkstoffs entsprechen. Zur Erzeugung des Hochenergie- oder Laserstrahls können beispielsweise CO₂-Laser, Nd:YAG-Laser, Yb-Faserlaser, Diodenlaser oder dergleichen vorgesehen sein. Ebenso kann vorgesehen sein, dass zwei oder mehr Hochenergie- bzw. Laserstrahlen verwendet werden, deren Belichtungsparameter vorzugsweise ebenfalls in Abhängigkeit der vorstehend genannten Bauparameter bestimmt werden.

Weitere Vorteile ergeben sich, indem zumindest der Belichtungsparameter Leistung des Hochenergiestrahls gegenüber einer Leistung in einem Inskinbereich reduziert wird, wenn der Bauparameter Überhangwinkel der Bauteilschicht im belichteten Bereich einem Downskinbereich entspricht, und/oder dass zumindest der Belichtungsparameter Leistung des Hochenergiestrahls gegenüber einer Leistung in einem Inskinbereich erhöht wird, wenn der Bauparameter Überhangwinkel der Bauteilschicht im belichteten Bereich einem Upskinbereich entspricht. Damit kann die Leistung des Hochenergiestrahls für alle möglichen Überhangwinkel individuell gesteuert und/oder geregelt werden. Unter einem Downskinbereich wird dabei ein überhängender Bauteilbereich verstanden, der unter sich keinen weiteren Bauteilbereich aufweist, während ein Upskinbereich dementsprechend ein Bauteilbereich ist, über dem sich kein weiterer Bauteilbereich befindet. Bauteilbereiche, die über und unter sich weitere Bauteilbereiche aufweisen, werden als Inskinbereiche bezeichnet. Indem im Downskinbereich bzw. in Überhangstrukturen des Bauteils die Leistung des Hochenergiestrahls in Abhängigkeit des konkreten Überhangwinkels relativ zu einer Leistung in einem Inskinbereich reduziert wird, werden ein Durchschlagen des Hochenergiestrahls ins lose Pulverbett und damit verbundene Fehlstellenbildungen und unregelmäßige Oberflächenstrukturen zuverlässig und bauteilspezifisch vermieden. Ebenso wird ein zu hoher Energieeintrag bei spitz zulaufenden Überhanggeometrien vermieden, da ansonsten die schnellere Wiederkehrzeit des Hochenergiestrahls in diesen Bereichen zu einem übermäßigen Energieeintrag und zu entsprechenden Überhitzungen führen würde. Durch die relative Erhöhung der Leistung des Hochenergiestrahls in Upskinbereichen wird demgegenüber dem Umstand Rechnung getragen, dass ein Teil der Energie des Hochenergiestrahls durch Inskinbereiche unter dem Upskinbereich absorbiert wird. Dementsprechend wird durch eine relative Erhöhung der Leistung in Abhängigkeit des Überhangwinkels sichergestellt, dass das Pulvermaterial im Upskinbereich zuverlässig verfestigt wird.

Weitere Vorteile ergeben sich, indem der zumindest eine Belichtungsparameter des Hochenergiestrahls aus der Gruppe Leistung, Geschwindigkeit und Fokuslage vor dem Herstellen der Bauteilschicht in Schritt b) in Abhängigkeit wenigstens eines Bauparameters aus der Gruppe Bauteildicke, Hatchabstand zu einer benachbarten Belichtungsspur, Einstrahlwinkel des Hochenergiestrahls zur Oberfläche der Bauteilschicht, Auslenkwinkel des Hochenergiestrahls bezogen auf eine Hochachse der Bauteilschicht, Überhangwinkel der Bauteilschicht, Schichtdicke der Bauteilschicht und Abstand zu einem vollen Volumenelement der Bauteilschicht vorbestimmt und als Datensatz zur Steuerung und/oder Regelung des Hochenergiestrahls bereitgestellt wird. Mit anderen Worten ist es vorgesehen, dass 1, 2 oder 3 Belichtungsparameter schon im Vorfeld des tatsächlichen Herstellungsschritts erfolgt und als Datensatz zur Steuerung und/oder Regelung des Hochenergiestrahls bereitgestellt und verwendet wird. Die Bestimmung des oder der Belichtungsparameter kann grundsätzlich nicht nur anhand des oder der vorstehend genannten Bauparameter, sondern zusätzlich anhand von Erfahrungswerten, Erprobungsergebnissen, Simulationen, statistischen Auswertungen oder beliebigen Kombinationen hieraus erfolgen.

In einer weiteren vorteilhaften Ausgestaltung der Erfindung ist es vorgesehen, dass der zumindest eine Belichtungsparameter des Hochenergiestrahls im Rahmen einer Bestimmung einer Hatchgeometrie der Bauteilschicht vorbestimmt wird. Damit können der oder die Belichtungsparameter aus der Gruppe Leistung, Geschwindigkeit und Fokuslage, einzeln und in beliebiger Kombination, zusammen mit der Ermittlung der Hatchgeometrie (Spurgeometrie) aus 3D-CAD-Bauteildaten des Bauteils oder Bauteilbereichs ermittelt werden. Hierdurch können die spezifischen Eigenschaften des Bauteilbereichs besonders gut berücksichtigt werden, da zusätzlich zu den bis zu 7 genannten Bauparametern auch die jeweilige Hatchvariante bzw. der jeweilige Fülltyp der betreffenden Bauteilschicht in die Bestimmung einfließen können.

In einer weiteren vorteilhaften Ausgestaltung der Erfindung ist es vorgesehen, dass während wenigstens eines Schritts b) und/oder nach wenigstens einem Schritt b) zumindest ein eine Qualität der hergestellten Bauteilschicht charakterisierender Messparameter ermittelt und der zumindest eine Belichtungsparameter des Hochenergiestrahls aus der Gruppe Leistung, Geschwindigkeit und Fokuslage in Abhängigkeit des Messparameters und des wenigstens einen Bauparameters bestimmt und/oder modifiziert wird. Damit wird während und/oder nach der Herstellung einer Bauteilschicht die Qualität der hergestellten Bauteilschicht kontrolliert, wozu ein entsprechender Messparameter bestimmt wird. Dieser Messparameter wird dann zusätzlich zu den bis zu 7 Bauparametern dazu verwendet, den oder die Belichtungsparameter zu bestimmen. Alternativ oder zusätzlich können ein oder mehrere Belichtungsparameter bereits vorbestimmt vorliegen und beispielsweise als Datensatz bereitgestellt werden. In diesem Fall wird der Messparameter dazu verwendet, den oder die bereits vorliegenden Belichtungsparameter zu modifizieren. Dies ermöglicht eine Regelung des Herstellungsschritts und damit einen zuverlässigen Ausgleich von Schwankungen im Herstellungsprozess.

In einer weiteren vorteilhaften Ausgestaltung der Erfindung ist es vorgesehen, dass eine Strahlungsquelle, mittels welcher der Hochenergiestrahl erzeugt wird, zumindest während eines Schritts b) nicht bewegt wird. Mit anderen Worten verbleibt die Strahlungsquelle während der Herstellung einer, mehrerer oder aller Bauteilschichten ortsfest bezüglich der Bauteilschicht, so dass lediglich der Hochenergiestrahl relativ zu der Bauteilschicht bewegt wird, um den pulverförmigen Bauteilwerkstoff zu belichten. Dies erleichtert die Bestimmung des oder der Belichtungsparameter.

Ein zweiter Aspekt der Erfindung betrifft eine Vorrichtung zur additiven Herstellung zumindest eines Bauteilbereichs eines Bauteils, insbesondere eines Bauteils einer Turbine oder eines Verdichters, umfassend mindestens eine Pulverzuführung zum Auftrag von mindestens einer Pulverschicht eines Bauteilwerkstoffs auf eine Aufbau- und Fügezone einer absenkbaren Bauteilplattform sowie mindestens eine Strahlungsquelle zum Erzeugen wenigstens eines Hochenergiestrahls, mittels welchem die Pulverschicht im Bereich der Aufbau- und Fügezone lokal zu einer Bauteilschicht verfestigbar ist. Dabei werden homogenere Werkstoffeigenschaften auch bei unterschiedlichen Bauteilgeometrien erfindungsgemäß dadurch ermöglicht, dass die Vorrichtung eine Speichereinrichtung mit einem in einem Speicher bereitgestellten Datensatz umfasst, wobei der Datensatz als Bauparameter einen Einstrahlwinkel des Hochenergiestrahls zur Oberfläche der Bauteilschicht und optional wenigstens einen weiteren Bauparameter aus der Gruppe Bauteildicke, Hatchabstand zu einer benachbarten Belichtungsspur, Auslenkwinkel des Hochenergiestrahls bezogen auf eine Hochachse der Bauteilschicht, Überhangwinkel der Bauteilschicht, Schichtdicke der Bauteilschicht und Abstand zu einem vollen Volumenelement der Bauteilschicht umfasst. Weiterhin umfasst die Vorrichtung eine Steuereinrichtung zum Steuern und/oder Regeln der Strahlungsquelle, wobei die Steuereinrichtung dazu ausgebildet ist, wenigstens einen Belichtungsparameter des Hochenergiestrahls aus der Gruppe Leistung, Geschwindigkeit und Fokuslage in Abhängigkeit des Datensatzes vorzubestimmen. Mit Hilfe der Speichereinrichtung und der Steuereinrichtung können somit 1, 2 oder 3 Belichtungsparameter aus der Gruppe Leistung, Geschwindigkeit und Fokuslage des Hochenergiestrahls beim Aufbau wenigstens einer Bauteilschicht unter Berücksichtigung des Einstrahlwinkels des Hochenergiestrahls zur Oberfläche der Bauteilschicht und optional von 1, 2, 3, 4, 5 oder 6 weiteren Bauparametern aus der Gruppe Bauteildicke, Hatchabstand zu einer benachbarten Belichtungsspur, Einstrahlwinkel des Hochenergiestrahls zur Oberfläche der Bauteilschicht, Auslenkwinkel des Hochenergiestrahls bezogen auf eine Hochachse der Bauteilschicht, Überhangwinkel der Bauteilschicht, Schichtdicke der Bauteilschicht und Abstand zu einem vollen Volumenelement der Bauteilschicht bestimmt werden. Vorzugsweise ist die Vorrichtung dazu ausgebildet, alle drei Belichtungsparameter abhängig oder unabhängig voneinander in Abhängigkeit aller sieben Bauparameter zu bestimmen. Hierdurch können für eine, mehrere oder alle Bauteilschichten, die mit Hilfe der Vorrichtung hergestellt werden, besonders gute, homogene und optimal an die jeweilige Geometrie der Bauteilschicht angepasste Werkstoffeigenschaften sichergestellt werden. Insbesondere können auch in Oberflächen- und Randbereichen sowie in spitz zulaufenden Bauteilbereichen ein Durchschlagen des Hochenergiestrahls einerseits und eine unzureichende Verfestigung des pulverförmigen Bauteilwerkstoffs andererseits verhindert werden.

Dabei hat es sich als vorteilhaft gezeigt, wenn die Vorrichtung zum Durchführen eines Verfahrens gemäß dem ersten Erfindungsaspekt ausgebildet ist. Die sich hieraus ergebenden Merkmale und deren Vorteile sind den Beschreibungen des ersten Erfindungsaspekts zu entnehmen, wobei vorteilhafte Ausgestaltungen des ersten Erfindungsaspekts grundsätzlich als vorteilhafte Ausgestaltungen des zweiten Erfindungsaspekts und umgekehrt anzusehen sind.

Weitere Vorteile ergeben sich, indem die Vorrichtung eine Messeinrichtung umfasst, mittels welcher zumindest ein eine Qualität der hergestellten Bauteilschicht charakterisierender Messparameter ermittelbar ist. Als Messeinrichtung kann beispielsweise eine optische Tomografieeinrichtung und/oder eine Einrichtung zur Schmelzbadanalyse verwendet werden.

Dabei hat es sich weiterhin als vorteilhaft gezeigt, wenn die Steuereinrichtung zum Datenaustausch mit der Messeinrichtung gekoppelt ist und ausgebildet ist, den wenigstens einen Belichtungsparameter des Hochenergiestrahls aus der Gruppe Leistung, Geschwindigkeit und Fokuslage in Abhängigkeit des Datensatzes und des Messparameters vorzubestimmen und/oder wenigstens einen bereits vorbestimmten Belichtungsparameter zu modifizieren. Mit anderen Worten ist die Vorrichtung dazu ausgebildet, während und/oder nach der Herstellung einer Bauteilschicht eine Kontrolle der Qualität der hergestellten Bauteilschicht durchzuführen, wozu der Messparameter bestimmt wird. Dieser Messparameter wird dann an die Steuereinrichtung übermittelt, welche den Messparameter zusätzlich zu den bis zu 7 Bauparametern dazu verwendet, den oder die Belichtungsparameter zu bestimmen und die Strahlungsquelle entsprechend anzusteuern. Alternativ oder zusätzlich können ein oder mehrere Belichtungsparameter bereits vorbestimmt in der Speichereinrichtung als Datensatz bereitgestellt sein. In diesem Fall verwendet die Steuereinrichtung den wenigstens einen Messparameter dazu, den oder die bereits vorliegenden Belichtungsparameter zu modifizieren, um die Ansteuerung des Hochenergiestrahls an die konkreten Gegebenheiten anzupassen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:
- Fig. 1: eine schematische Aufsicht einer Strahlungsquelle, mittels welcher ein Hochenergiestrahl zum lokalen Verfestigen einer Bauteilschicht erzeugt wird;
- Fig. 2: eine schematische Aufsicht des in Fig. 1 gezeigten Details I;
- Fig. 3: eine schematische Aufsicht des in Fig. 1 gezeigten Details II; und
- Fig. 4: eine schematische seitliche Schnittansicht des in Fig. 1 gezeigten Details II.

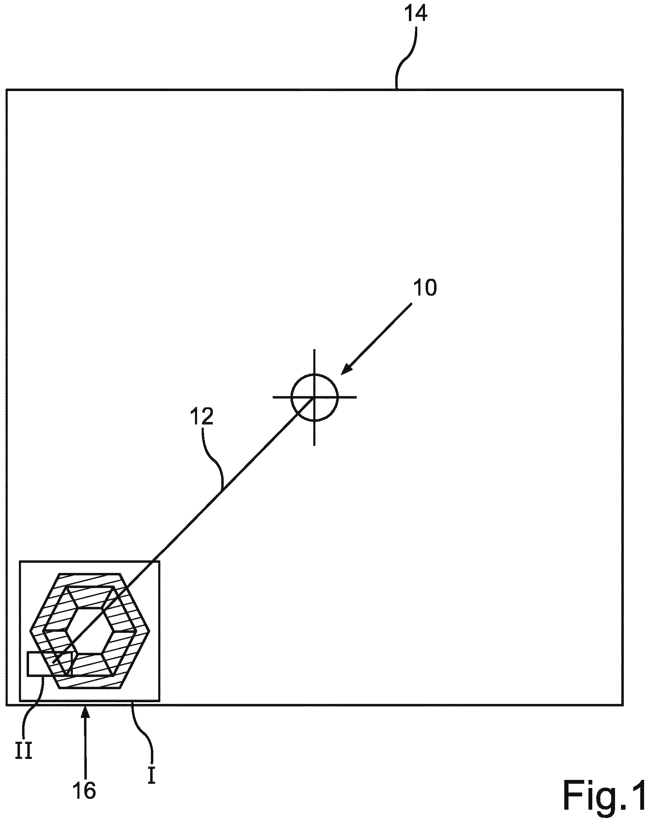

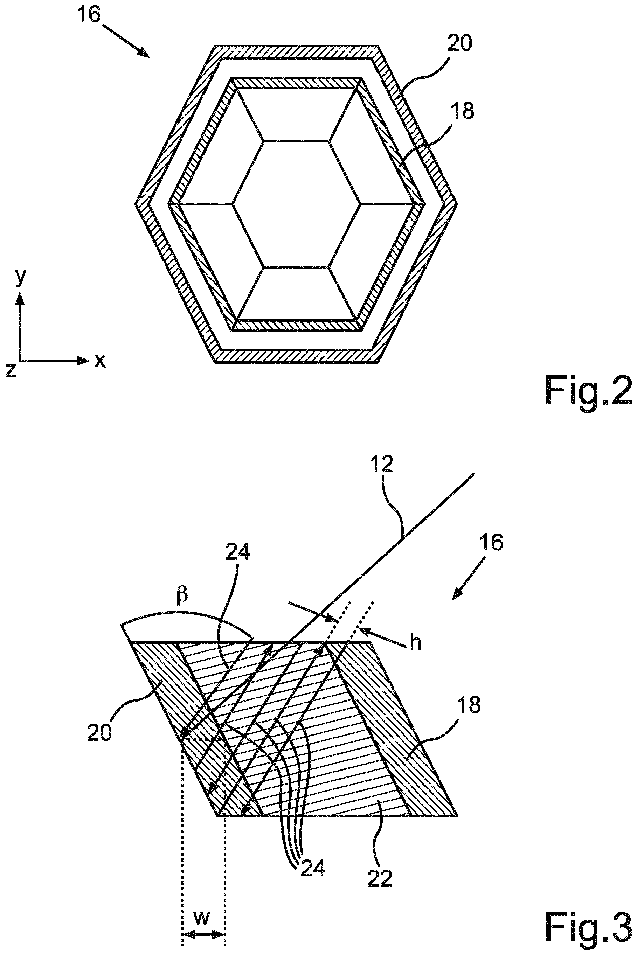

Fig. 1 zeigt eine schematische Aufsicht einer Strahlungsquelle 10 einer Vorrichtung zur additiven Herstellung zumindest eines Bauteilbereichs eines Bauteils, beispielsweise eines Bauteils einer Strömungsmaschine. Die Strahlungsquelle 10 ist vorliegend als Laser ausgebildet und erzeugt einen Laserstrahl 12 zum schichtweisen lokalen Verfestigen eines pulverförmigen Bauteilwerkstoffs, der in einer Aufbau- und Fügezone 14 auf einer absenkbaren Bauteilplattform (nicht gezeigt) aufgetragen ist. Die Strahlungsquelle 10 ist dabei im vorliegenden Ausführungsbeispiel ortsfest bezüglich der Aufbau- und Fügezone 14 in der Vorrichtung montiert, so dass der Laserstrahl 12 durch eine entsprechende Optik in an sich bekannter Weise auf die gewünschten Bereiche der Aufbau- und Fügezone 14 abgelenkt wird. Dabei werden die Belichtungsparameter Leistung P, Geschwindigkeit v und Fokuslage F des Laserstrahls 12 in Abhängigkeit mehrerer Bauparameter aus der Gruppe Bauteildicke bₜₑᵢₗ, Hatchabstand h zu einer benachbarten Belichtungs- oder Scanspur 24 (Fig. 3), Einstrahlwinkel α des Hochenergie- bzw. Laserstrahls 12 zur Oberfläche einer jeweiligen Bauteilschicht 15, Auslenkwinkel β des Hochenergie- bzw. Laserstrahls 12 bezogen auf eine Hochachse z der Bauteilschicht, Überhangwinkel γ der Bauteilschicht, Schichtdicke n der Bauteilschicht und Abstand w zu einem vollen Volumenelement der Bauteilschicht eingestellt, um eine möglichst homogene und hochwertige Werkstoffqualität sicherzustellen.

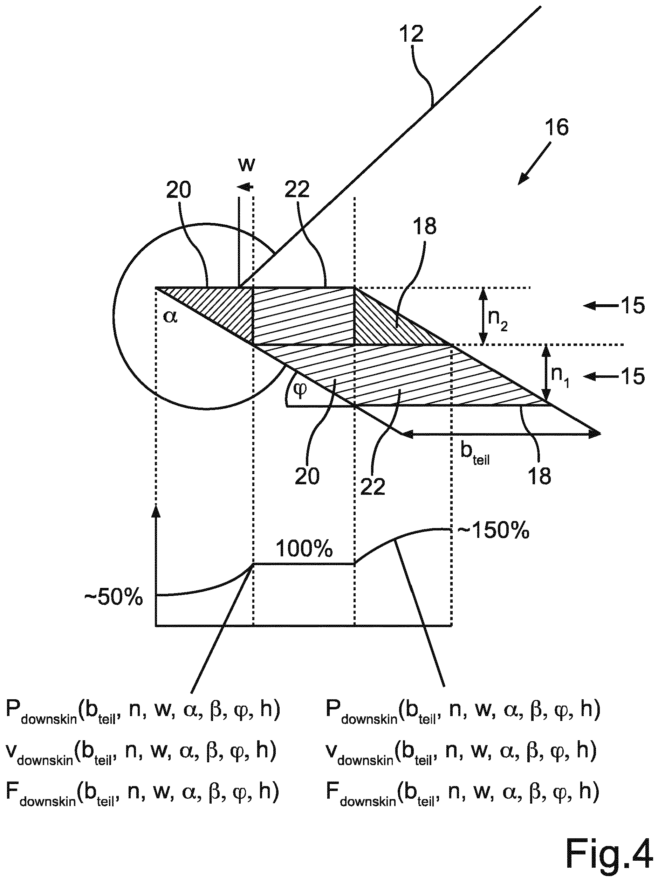

Fig. 2 zeigt hierzu eine schematische Aufsicht des Bauteilbereichs 16 gemäß dem in Fig. 1 gezeigten Detail I und wird im Folgenden in Zusammenschau mit Fig. 3 und Fig. 4 erläutert werden, wobei Fig. 3 eine schematische Aufsicht des in Fig. 1 gezeigten Details II und Fig. 4 eine schematische seitliche Schnittansicht des in Fig. 1 gezeigten Details II zeigen. Man erkennt, dass der additiv hergestellte Bauteilbereich 16, von dem vorliegend exemplarisch lediglich zwei Bauteilschichten 15 mit der jeweiligen Schichtdicke n₁ und n₂ gezeigt sind, einen Upskinbereich 18, einen Downskinbereich 20 und einen Inskinbereich 22 aufweist. Wie man insbesondere in Fig. 4 erkennt, werden die Belichtungsparameter Leistung P, Geschwindigkeit v und Fokuslage F des Hochenergiestrahls jeweils als Funktion der Bauparameter bₜₑᵢₗ, n, w, α, β, ϕ und h entlang der in Fig. 3 mit Pfeilen kenntlich gemachten Scanvektoren 24 ermittelt:
P(b_{teil,} n, w, α, β, ϕ, h)
v(bₜₑᵢₗ, n, w, α, β, ϕ, h)
F(bₜₑᵢₗ, n, w, α, β, ϕ, h)

Wie man in Fig. 4 erkennt, wird die Leistung P im Downskinbereich 20 bis auf etwa 50 % der im Inskin- oder Zwischenbereich 22 verwendeten Leistung P reduziert, so dass die Leistung P des Hochenergiestrahls 12 an der dünnsten Stelle des Downskinbereichs 20 bzw. beim kleinsten Einstrahlwinkel α den geringsten Wert aufweist. Die Funktion der Reduzierung ist dabei grundsätzlich nicht auf den gezeigten nicht-linearen Verlauf beschränkt, sondern kann auch linear verlaufen oder andere Funktionsverläufe annehmen. Im Inskinbereich 22 wird die Leistung P gleichmäßig auf relativen 100 % gehalten. Im Upskinbereich 18 wird die Leistung P nicht-linear auf bis zu 150 % bezogen auf die Leistung P im Inskinbereich 22 gesteigert, so dass die Leistung P des Hochenergiestrahls 12 an der dicksten Stelle des Downskinbereichs 20 unter Einbeziehung der darunter liegenden Bauteilschicht 15 am höchsten ist. Auch hier sind grundsätzlich andere Funktionsverläufe denkbar.

Durch diese gezielte Parametrisierung in Abhängigkeit von Überhangwinkel γ, Bauteilgeometriespezifischen Bauparametern bₜₑᵢₗ, n, w, ϕ und h und Laserstrahlwinkel α, β können die Qualität des Bauteilbereichs 16 allgemein und dessen Oberflächenqualität im Besonderen wesentlich verbessert und vergleichmäßigt werden. Dazu wird beispielsweise bei der Datenaufbereitung ein weiterer Parameter an eine Steuereinrichtung übergeben, der die Bauteilgeometrie (Überhangwinkel (γ), Schichtdicke (n) etc.) sowie den Lasereinstrahlwinkel (α) repräsentiert. Mit Hilfe dieser Werte werden beim Aufbau über die vorstehend erwähnten Funktionen die Leistung P, die Geschwindigkeit v und der Fokus F des Hochenergiestrahls 12 entlang der Scanvektoren 24 bestimmt.

Die Einstellung unter anderem der Leistung P ist damit abhängig von der Geometrie bzw. dem Überhang des Bauteilbereichs 16 und kann schon im Vorfeld bei der Berechnung der Hatchgeometrie erfolgen. Die Berechnung kann sich beispielsweise an Erfahrungswerten (Erprobung, Simulation, Statistik usw.) orientieren. Ebenso ist es möglich, dass eine Online-Regelung, also eine Bestimmung bzw. Modifizierung während des Herstellungsschritts des betreffenden Bauteilbereichs 16 erfolgt. Hierzu wird durch eine Messeinrichtung (Optische Tomografie, Schmelzbadanalyse usw.) wenigstens ein die Bauteilqualität charakterisierender Messwert ermittelt und kann anschließend zum Bestimmen oder Modifizieren der Belichtungsparameter verwendet werden. Dies erlaubt einen Ausgleich von Schwankungen im Herstellungsprozess im Sinne einer Online-Regelung.

### Bezugszeichenliste:

- 10: Strahlungsquelle
- 12: Hochenergiestrahl
- 14: Aufbau- und Fügezone
- 15: Bauteilschicht
- 16: Bauteilbereich
- 18: Upskinbereich
- 20: Downskinbereich
- 22: Inskinbereich
- 24: Scanvektoren
- P: Leistung
- v: Geschwindigkeit
- F: Fokuslage des Hochenergiestrahls 12
- bₜₑᵢₗ: Bauteildicke
- h: Hatchabstand zu einer benachbarten Belichtungsspur
- α: Einstrahlwinkel des Hochenergiestrahls 12 zur Oberfläche der Bauteilschicht 15
- β: Auslenkwinkel des Hochenergiestrahls 12 bezogen auf eine Hochachse z der Bauteilschicht 15
- γ: Überhangwinkel der Bauteilschicht 15
- n: Schichtdicke n der Bauteilschicht 15
- w: Abstand zu einem vollen Volumenelement der Bauteilschicht 15

## Patentansprüche

1. Verfahren zum additiven Herstellen zumindest eines Bauteilbereichs (16) eines Bauteils, folgende Schritte umfassend:
a) schichtweises Auftragen von mindestens einem pulverförmigen Bauteilwerkstoff auf eine Bauteilplattform im Bereich einer Aufbau- und Fügezone (14);
b) schichtweises und lokales Verfestigen des Bauteilwerkstoffs durch selektives Belichten des Bauteilwerkstoffs mittels wenigstens eines Hochenergiestrahls (12) im Bereich der Aufbau- und Fügezone (14) unter Ausbildung einer Bauteilschicht (15);
c) schichtweises Absenken der Bauteilplattform um eine vordefinierte Schichtdicke; und
d) Wiederholen der Schritte a) bis c) bis zur Fertigstellung des Bauteilbereichs (16) oder des Bauteils,
**dadurch gekennzeichnet, dass**
während wenigstens eines Schritts b) zumindest ein Belichtungsparameter des Hochenergiestrahls aus der Gruppe Leistung (P), Geschwindigkeit (v) und Fokuslage (F) in Abhängigkeit eines Einstrahlwinkels (α) des Hochenergiestrahls (12) zur Oberfläche der Bauteilschicht (15) als Bauparameter und optional in Abhängigkeit wenigstens eines weiteren Bauparameters aus der Gruppe Bauteildicke (bₜₑᵢₗ), Hatchabstand (h) zu einer benachbarten Belichtungsspur, Auslenkwinkel (β) des Hochenergiestrahls (12) bezogen auf eine Hochachse (z) der Bauteilschicht (15), Überhangwinkel (γ) der Bauteilschicht (15), Schichtdicke (n) der Bauteilschicht (15) und Abstand (w) zu einem vollen Volumenelement der Bauteilschicht (15) eingestellt wird.

2. Verfahren nach Anspruch 1,
**dadurch gekennzeichnet, dass**
als additives Herstellungsverfahren ein Lasersinter- und/oder Laserschmelzverfahren und/oder als Hochenergiestrahl (12) ein Laserstrahl verwendet wird.

3. Verfahren nach Anspruch 1 oder 2,
**dadurch gekennzeichnet, dass**
zumindest der Belichtungsparameter Leistung (P) des Hochenergiestrahls (12) gegenüber einer Leistung in einem Inskinbereich (22) reduziert wird, wenn der Bauparameter Überhangwinkel (γ) der Bauteilschicht (15) im belichteten Bereich einem Downskinbereich (20) entspricht, und/oder dass zumindest der Belichtungsparameter Leistung (P) des Hochenergiestrahls (12) gegenüber einer Leistung in einem Inskinbereich (22) erhöht wird, wenn der Bauparameter Überhangwinkel (γ) der Bauteilschicht (15) im belichteten Bereich einem Upskinbereich (18) entspricht.

4. Verfahren nach einem der Ansprüche 1 bis 3,
**dadurch gekennzeichnet, dass**
der zumindest eine Belichtungsparameter des Hochenergiestrahls (12) aus der Gruppe Leistung (P), Geschwindigkeit (v) und Fokuslage (F) vor dem Herstellen der Bauteilschicht (15) in Schritt b) in Abhängigkeit wenigstens eines Bauparameters aus der Gruppe Bauteildicke (bₜₑᵢₗ), Hatchabstand (h) zu einer benachbarten Belichtungsspur, Einstrahlwinkel (α) des Hochenergiestrahls zur Oberfläche der Bauteilschicht, Auslenkwinkel (β) des Hochenergiestrahls bezogen auf eine Hochachse der Bauteilschicht, Überhangwinkel (γ) der Bauteilschicht, Schichtdicke (n) der Bauteilschicht und Abstand (w) zu einem vollen Volumenelement der Bauteilschicht vorbestimmt und als Datensatz zur Steuerung und/oder Regelung des Hochenergiestrahls (12) bereitgestellt wird.

5. Verfahren nach Anspruch 4,
**dadurch gekennzeichnet, dass**
der zumindest eine Belichtungsparameter (P, v, F) des Hochenergiestrahls (12) im Rahmen einer Bestimmung einer Hatchgeometrie der Bauteilschicht (15) vorbestimmt wird.

6. Verfahren nach einem der Ansprüche 1 bis 5,
**dadurch gekennzeichnet, dass**
während wenigstens eines Schritts b) und/oder nach wenigstens einem Schritt b) zumindest ein eine Qualität der hergestellten Bauteilschicht (15) charakterisierender Messparameter ermittelt und der zumindest eine Belichtungsparameter des Hochenergiestrahls (12) aus der Gruppe Leistung (P), Geschwindigkeit (v) und Fokuslage (F) in Abhängigkeit des Messparameters und des wenigstens einen Bauparameters (bₜₑᵢₗ, n, w, α, β, ϕ, h) bestimmt und/oder modifiziert wird.

7. Verfahren nach einem der Ansprüche 1 bis 6,
**dadurch gekennzeichnet, dass**
eine Strahlungsquelle (10), mittels welcher der Hochenergiestrahl (12) erzeugt wird, zumindest während eines Schritts b) nicht bewegt wird.

8. Vorrichtung zur additiven Herstellung zumindest eines Bauteilbereichs (15) eines Bauteils, insbesondere eines Bauteils einer Turbine oder eines Verdichters, umfassend:
- mindestens eine Pulverzuführung zum Auftrag von mindestens einer Pulverschicht aus einem Bauteilwerkstoff auf eine Aufbau- und Fügezone (14) einer absenkbaren Bauteilplattform; und
- mindestens eine Strahlungsquelle (10) zum Erzeugen wenigstens eines Hochenergiestrahls (12), mittels welchem die Pulverschicht im Bereich der Aufbau- und Fügezone (14) lokal zu einer Bauteilschicht (15) verfestigbar ist,
**dadurch gekennzeichnet, dass**
diese
- eine Speichereinrichtung mit einem in einem Speicher bereitgestellten Datensatz umfasst, wobei der Datensatz als Bauparameter einen Einstrahlwinkel (α) des Hochenergiestrahls (12) zur Oberfläche der Bauteilschicht (15) und optional wenigstens einen weiteren Bauparameter aus der Gruppe Bauteildicke (bₜₑᵢₗ), Hatchabstand (h) zu einer benachbarten Belichtungsspur, Einstrahlwinkel (α) des Hochenergiestrahls (12) zur Oberfläche der Bauteilschicht (15), Auslenkwinkel (β) des Hochenergiestrahls (12) bezogen auf eine Hochachse (z) der Bauteilschicht (15), Überhangwinkel (γ) der Bauteilschicht (15), Schichtdicke (n) der Bauteilschicht (15) und Abstand (w) zu einem vollen Volumenelement der Bauteilschicht (15) umfasst; und
- eine Steuereinrichtung zum Steuern und/oder Regeln der Strahlungsquelle (10) umfasst, wobei die Steuereinrichtung dazu ausgebildet ist, wenigstens einen Belichtungsparameter des Hochenergiestrahls (12) aus der Gruppe Leistung (P), Geschwindigkeit (v) und Fokuslage (F) in Abhängigkeit des Datensatzes vorzubestimmen.

9. Vorrichtung nach Anspruch 8,
**dadurch gekennzeichnet, dass**
diese eine Messeinrichtung umfasst, mittels welcher zumindest ein eine Qualität der hergestellten Bauteilschicht (15) charakterisierender Messparameter ermittelbar ist.

10. Vorrichtung nach Anspruch 9,
**dadurch gekennzeichnet, dass**
die Steuereinrichtung zum Datenaustausch mit der Messeinrichtung gekoppelt ist und ausgebildet ist, den wenigstens einen Belichtungsparameter des Hochenergiestrahls (12) aus der Gruppe Leistung (P), Geschwindigkeit (v) und Fokuslage (F) in Abhängigkeit des Datensatzes und des Messparameters vorzubestimmen und/oder wenigstens einen bereits vorbestimmten Belichtungsparameter (P, v, F) zu modifizieren.

## Claims

1. Method for the additive manufacture of at least one component region (16) of a component, comprising the following steps:
(a) applying at least one pulverized component material layer by layer to a component platform in the region of a build-up and joining region (14);
(b) locally solidifying the component material layer by layer by selectively exposing the component material by means of at least one high-energy beam (12) in the region of the build-up and joining region (14), forming a component layer (15);
(c) lowering the component platform layer by layer by a predefined layer thickness; and
(d) repeating steps a) to c) until completion of the component region (16) or the component,
**characterized in that**, during at least one step b), at least one exposure parameter of the high-energy beam from the group power (P), speed (v) and focal position (F) is set on the basis of an angle of incidence (α) of the high-energy beam (12) with respect to the surface of the component layer (15) as a construction parameter and optionally on the basis of at least one further construction parameter from the group component thickness (bₜₑᵢₗ), hatch distance (h) to an adjacent exposure track, deflection angle (β) of the high-energy beam (12) relative to a vertical axis (z) of the component layer (15), overhang angle (γ) of the component layer (15), layer thickness (n) of the component layer (15) and distance (w) to a complete volume element of the component layer (15).

2. Method according to claim 1, **characterized in that** a laser sintering and/or laser melting method is used as the additive manufacturing method and/or a laser beam is used as the high-energy beam (12).

3. Method according to either claim 1 or claim 2, **characterized in that** at least the exposure parameter power (P) of the high-energy beam (12) is reduced by comparison with a power in an inskin region (22) if the construction parameter overhang angle (γ) of the component layer (15) in the exposed region corresponds to a downskin region (20), and/or **in that** at least the exposure parameter power (P) of the high-energy beam (12) is increased by comparison with a power in an inskin region (22) if the construction parameter overhang angle (γ) of the component layer (15) in the exposed region corresponds to an upskin region (18).

4. Method according to any of claims 1 to 3, **characterized in that** the at least one exposure parameter of the high-energy beam (12) from the group power (P), speed (v) and focal position (F) is predetermined, before the component layer (15) is produced in step b), on the basis of at least one construction parameter from the group component thickness (bₜₑᵢₗ), hatch distance (h) to an adjacent exposure track, angle of incidence (α) of the high-energy beam with respect to the surface of the component layer, deflection angle (β) of the high-energy beam relative to a vertical axis of the component layer, overhang angle (γ) of the component layer, layer thickness (n) of the component layer and distance (w) to a complete volume element of the component layer, and is provided as a data set for controlling and/or regulating the high-energy beam (12).

5. Method according to claim 4, **characterized in that** the at least one exposure parameter (P, v, F) of the high-energy beam (12) is predetermined within the framework of determining a hatch geometry of the component layer (15).

6. Method according to any of claims 1 to 5, **characterized in that**, during at least one step b) and/or after at least one step b), at least one measuring parameter characterizing a quality of the manufactured component layer (15) is determined, and the at least one exposure parameter of the high-energy beam (12) from the group power (P), speed (v) and focal position (F) is determined and/or modified on the basis of the measuring parameter and the at least one construction parameter (bₜₑᵢₗ, n, w, a, β, ϕ, h).

7. Method according to any of claims 1 to 6, **characterized in that** a radiation source (10), by means of which the high-energy beam (12) is generated, is not moved at least during one step b).

8. Device for the additive manufacture of at least one component region (15) of a component, in particular a component of a turbine or a compressor, comprising:
- at least one powder feed for applying at least one powder layer of a component material to a build-up and joining region (14) of a lowerable component platform; and
- at least one radiation source (10) for generating at least one high-energy beam (12), by means of which the powder layer can be solidified locally in the region of the build-up and joining region (14) to form a component layer (15),
**characterized in that** this
- comprises a memory apparatus having a data set provided in a memory, the data set comprising, as a construction parameter, an angle of incidence (α) of the high-energy beam (12) with respect to the surface of the component layer (15) and optionally comprising at least one further construction parameter from the group component thickness (bₜₑᵢₗ), hatch distance (h) to an adjacent exposure track, angle of incidence (α) of the high-energy beam (12) with respect to the surface of the component layer (15), deflection angle (β) of the high-energy beam (12) relative to a vertical axis (z) of the component layer (15), overhang angle (γ) of the component layer (15), layer thickness (n) of the component layer (15) and distance (w) to a complete volume element of the component layer (15); and
- comprises a control apparatus for controlling and/or regulating the radiation source (10), the control apparatus being designed to predetermine at least one exposure parameter of the high-energy beam (12) from the group power (P), speed (v) and focal position (F) on the basis of the data set.

9. Device according to claim 8, **characterized in that** it comprises a measuring apparatus by means of which at least one measuring parameter characterizing a quality of the manufactured component layer (15) can be determined.

10. Device according to claim 9, **characterized in that** the control apparatus for data exchange is coupled to the measuring apparatus and is designed to predetermine the at least one exposure parameter of the high-energy beam (12) from the group power (P), speed (v) and focal position (F) on the basis of the data set and the measurement parameter and/or to modify at least one already predetermined exposure parameter (P, v, F).

## Revendications

1. Procédé de fabrication additive d'au moins une partie d'un composant (16), comprenant les étapes :
(a) d'application, par couches, d'au moins une couche d'un matériau pulvérulent sur une plate-forme de composant dans la région d'une zone de construction et de jonction (14),
(b) de solidification par couches et locale du matériau de composant par une exposition sélective du matériau de composant au moyen d'au moins un faisceau à haute énergie (12) dans la région de la zone de construction et de jonction (14) avec formation d'une couche de composant (15),
(c) d'abaissement par couches de la plateforme de composant à raison d'une épaisseur de couche prédéfinie ; et
(d) de répétition des étapes a) à c) jusqu'à l'achèvement de la partie (16) du composant ou du composant même,
**caractérisé en ce que**,
pendant une étape b) au moins, au moins un paramètre d'exposition du faisceau à haute énergie du groupe constitué de la puissance (P), de la vitesse (v) et de la position focale (F) est défini en fonction d'un angle de rayonnement (α) du faisceau à haute énergie (12) par rapport à la surface de la couche de composant (15) comme paramètre de construction et, de façon facultative, en fonction d'au moins un autre paramètre de construction du groupe constitué de l'épaisseur de composant (bₚₐᵣₜᵢₑ), de la distance de trappe (h) par rapport à une trajectoire d'exposition adjacente, de l'angle de déviation (β) du faisceau à haute énergie (12) par rapport à un axe vertical (z) de la couche de composant (15), de l'angle d'approche (γ) de la couche de composant (15), de l'épaisseur de couche (n) de la couche de composant (15) et de la distance (w) par rapport à un élément de volume plein de la couche de composant (15).

2. Procédé selon la revendication 1, **caractérisé en ce qu'**un procédé de frittage au laser et/ou de fusion laser est utilisé comme procédé de fabrication additive et/ou un faisceau laser est utilisé comme faisceau à haute énergie (12).

3. Procédé selon la revendication 1 ou 2, **caractérisé en ce qu'**au moins le paramètre d'exposition puissance (P) du faisceau à haute énergie (12) est réduit par rapport à une puissance dans une région inskin (22) si le paramètre de construction angle d'approche (γ) de la couche de composant (15) dans la région exposée correspond à une région downskin (20), et/ou **en ce qu'**au moins le paramètre d'exposition puissance (P) du faisceau à haute énergie (12) est accru en comparaison avec la puissance dans une région inskin (22) si le paramètre de construction angle d'approche (γ) de la couche de composant (15) dans la zone exposée correspond à une région upskin (18).

4. Procédé selon l'une des revendications 1 à 3, **caractérisé en ce que** l'au moins un paramètre d'exposition du faisceau à haute énergie (12) du groupe constitué de la puissance (P), de la vitesse (v) et de la position focale (F) est prédéterminé avant la fabrication de la couche de composant (15) dans l'étape b) en fonction d'au moins un paramètre de construction du groupe constitué de l'épaisseur de composant (bₚₐᵣₜᵢₑ), de la distance de trappe (h) par rapport à une piste de faisceau adjacente, de l'angle de rayonnement (α) du faisceau à haute énergie par rapport la surface de la couche de composant, de l'angle de déviation (β) du faisceau à haute énergie par rapport à un axe vertical de la couche de composant, de l'angle d'approche (γ) de la couche de composant, de l'épaisseur (n) de la couche de composant et de la distance (w) par rapport à un élément de volume plein de la couche de composant et fourni comme jeu de données pour la commande et/ou la réglementation du faisceau à haute énergie (12).

5. Procédé selon la revendication 4, **caractérisé en ce que** l'au moins un paramètre d'exposition (P, v, F) du faisceau à haute énergie (12) est prédéterminé dans le cadre d'une détermination d'une géométrie de trappe de la couche de composant (15).

6. Procédé selon l'une des revendications 1 à 5, **caractérisé en ce que**, pendant au moins une étape b) et/ou après au moins une étape b), on détermine au moins un paramètre de mesure caractérisant une qualité de la couche de composant (15) fabriquée et on détermine et/ou modifie l'au moins un paramètre d'exposition du faisceau à haute énergie (12) du groupe constitué de la puissance (P), de la vitesse (v) et de la position focale (F) en fonction du paramètre de mesure et de l'au moins un paramètre de construction (bₚₐᵣₜᵢₑ, n, w, α, β, ϕ, h).

7. Procédé selon l'une des revendications 1 à 6, **caractérisé en ce qu'**une source de rayonnement (10) au moyen de laquelle le faisceau à haute énergie (12) est généré n'est pas déplacée pendant au moins une étape b).

8. Dispositif de fabrication additive d'au moins une partie d'un composant (15), en particulier d'un composant d'une turbomachine ou d'un compresseur, comprenant :
- au moins un dispositif d'alimentation en poudre pour appliquer au moins une couche de poudre d'un matériau de composant sur une zone de construction et de jonction (14) d'une plate-forme de composant abaissable, et
- au moins une source de rayonnement (10) pour générer au moins un faisceau à haute énergie (12) au moyen duquel la couche de poudre peut être solidifiée localement pour former une couche de composant (15) dans la région de la zone de construction et de jonction (14),
**caractérisé en ce que**
celui-ci
- comprend un dispositif de mémoire comprenant un jeu de données fourni dans une mémoire, le jeu de données comprenant, comme paramètre de construction, un angle de rayonnement (α) du faisceau à haute énergie (12) par rapport à la surface de la couche de composant (15) et éventuellement au moins un autre paramètre de construction dans le groupe constitué de l'épaisseur de composant (bₚₐᵣₜᵢₑ), de la distance de trappe (h) par rapport à une trajectoire d'exposition adjacente, de l'angle de rayonnement (α) du faisceau à haute énergie (12) par rapport à la surface de la couche de composant (15), de l'angle de déviation (β) du faisceau à haute énergie (12) par rapport à un axe vertical (z) de la couche de composant (15), d'un angle d'approche (γ) de la couche de composant (15), de l'épaisseur de couche (n) de la couche de composant (15) et de la distance (w) par rapport à un élément de volume plein de la couche de composant (15) ; et
- comprend un dispositif de commande pour commander et/ou réguler la source de rayonnement (10), le dispositif de commande étant conçu pour prédéterminer au moins un paramètre d'exposition du faisceau à haute énergie (12) du groupe constitué de la puissance (P), de la vitesse (v) et de la position focale (F) en fonction du jeu de données.

9. Dispositif selon la revendication 8, **caractérisé en ce qu'**il comprend un dispositif de mesure au moyen duquel il est possible de déterminer au moins un paramètre de mesure caractérisant une qualité de la couche de composant (15) fabriquée.

10. Dispositif selon la revendication 9, **caractérisé en ce que** le dispositif de commande pour l'échange de données est couplé au dispositif de mesure et est conçu pour prédéterminer l'au moins un paramètre d'exposition du faisceau à haute énergie (12) du groupe constitué de la puissance (P), de la vitesse (v) et de la position focale (F) en fonction du jeu de données et du paramètre de mesure et/ou pour modifier au moins un paramètre d'exposition déjà prédéterminé (P, v, F).
